# EUROPEAN PATENT APPLICATION

(11) **EP 4 730 152 A1**
(43) Date of publication of application: **22.04.2026**
(21) Application number: 25209423.0
(22) Date of filing: 17.10.2025
(51) Int. Cl.: G06F 16/3329, G06F 40/30, G06N 3/0475

(54) **SYSTEMS, METHODS, AND MEDIA FOR CHECKING TEXT FOR POLICY VIOLATIONS**

(30) Priority: 18.10.2024 US 202418920157
(71) Applicant: Skyhigh Security LLC, Plano, TX 75024 (US)
(72) Inventor: Juniper, Andrew, Holton, Oxford, OX33 1PR (GB); Thurman, Louis Duncan, Oxford, Oxfordshire, OX4 2EW (GB); Ing, Michael William Donald, Aylesbury, Buckinghamshire, HP17 9TP (GB); Mariswamy, Hari Prasad, Aylesbury, HP217AN (GB); Bishop, Michael Geoffrey, Thame, Oxfordshire, OX9 3NP (GB)
(74) Representative: Samson & Partner Patentanwälte mbB

(57) **Abstract**

Mechanisms, including systems, methods, and media, for checking text for policy violations are provided, the mechanisms including: receiving data; selecting a policy that applies to the data; generating a large language model query prompt to evaluate the data against the policy using a hardware processor; querying a large language model using the query prompt; receiving an output from the large language model; determining that the text violates the policy based on the output; and in response to determining that the text violates the policy, taking a security action on the text. In some of these mechanisms, determining that the data violates the policy includes determining that the data has a meaning that is similar to content specified in the policy. In some of these mechanisms, determining that the data violates the policy includes determining that the data has a similar sentiment to content specified in the policy.

## Description

### Background

Data loss prevention (DLP) mechanisms attempt to prevent data from being improperly moved from within the control of an organization to some location outside the control of the organization. For example, an organization may want to prevent customer lists, financial data, formulas, recipes, source code, engineering information, design information, personal identifying information, credit card information and many other types of data from being moved outside the control of the organization. To do so, the organization may implement mechanisms that scan communications for certain keywords that indicate that the communications contain data sought to be protected. Scanning for keywords might be inadequate however because such scanning might not detect alternate words with the same or similar meaning or words with the same or similar meaning in a language other than the language being scanned for.

Accordingly, new mechanisms for checking text for policy violations are desirable.

### Summary

In accordance with some embodiments, mechanisms, including systems, methods, and media for checking text for policy violations are provided.

In some embodiments, systems for checking text for policy violations are provided, the systems comprising: a memory; and at least one hardware processor that is coupled to the memory and that is collectively configured to at least: receive data; select a policy that applies to the data; generate a large language model query prompt to evaluate the data against the policy; query a large language model using the query prompt; receive an output from the large language model; determine that the text violates the policy based on the output; and in response to determining that the text violates the policy, take a security action on the text. In some of these embodiments, the at least one hardware processor determines that the data violates the policy by at least determining that the data has a meaning that is similar to content specified in the policy. In some of these embodiments, the at least one hardware processor determines that the data violates the policy by at least determining that the data has a similar sentiment to content specified in the policy. In some of these embodiments, the output is a score and wherein the at least one hardware processor determines that the data violates the policy by determining that the score meets a threshold. In some of these embodiments, the security action is blocking further use of the text. In some of these embodiments, the data is text. In some of these embodiments, the query prompt includes embeddings generated using a retrieval-augmented generation (RAG) process.

In some embodiments, methods for checking text for policy violations are provided, the methods comprising: receiving data; selecting a policy that applies to the data; generating a large language model query prompt to evaluate the data against the policy using a hardware processor; querying a large language model using the query prompt; receiving an output from the large language model; determining that the text violates the policy based on the output; and in response to determining that the text violates the policy, taking a security action on the text. In some of these embodiments, determining that the data violates the policy includes determining that the data has a meaning that is similar to content specified in the policy. In some of these embodiments, determining that the data violates the policy includes determining that the data has a similar sentiment to content specified in the policy. In some of these embodiments, the output is a score and wherein determining that the data violates the policy includes determining that the score meets a threshold. In some of these embodiments, the security action is blocking further use of the text. In some of these embodiments, the data is text. In some of these embodiments, the query prompt includes embeddings generated using a retrieval-augmented generation (RAG) process.

In some embodiments, non-transitory computer-readable media containing computer executable instructions that, when executed by a processor, cause the processor to perform a method for checking text for policy violations are provided, the method comprising: receiving data; selecting a policy that applies to the data; generating a large language model query prompt to evaluate the data against the policy; querying a large language model using the query prompt; receiving an output from the large language model; determining that the text violates the policy based on the output; and in response to determining that the text violates the policy, taking a security action on the text. In some of these embodiments, determining that the data violates the policy includes determining that the data has a meaning that is similar to content specified in the policy. In some of these embodiments, determining that the data violates the policy includes determining that the data has a similar sentiment to content specified in the policy. In some of these embodiments, the output is a score and wherein determining that the data violates the policy includes determining that the score meets a threshold. In some of these embodiments, the security action is blocking further use of the text. In some of these embodiments, the data is text.

### Brief Description of the Drawings

FIG. 1 is an example block diagram of a system for checking text for policy violations in accordance with some embodiments
FIG. 2 is an example block diagram of hardware that can be used in components of the system of FIG. 1 in accordance with some embodiments
FIG. 3 is an example flow diagram of a process for checking text for policy violations in accordance with some embodiments

### Detailed Description

In accordance with some embodiments, mechanisms, including systems, methods, and media for checking text for policy violations are provided.

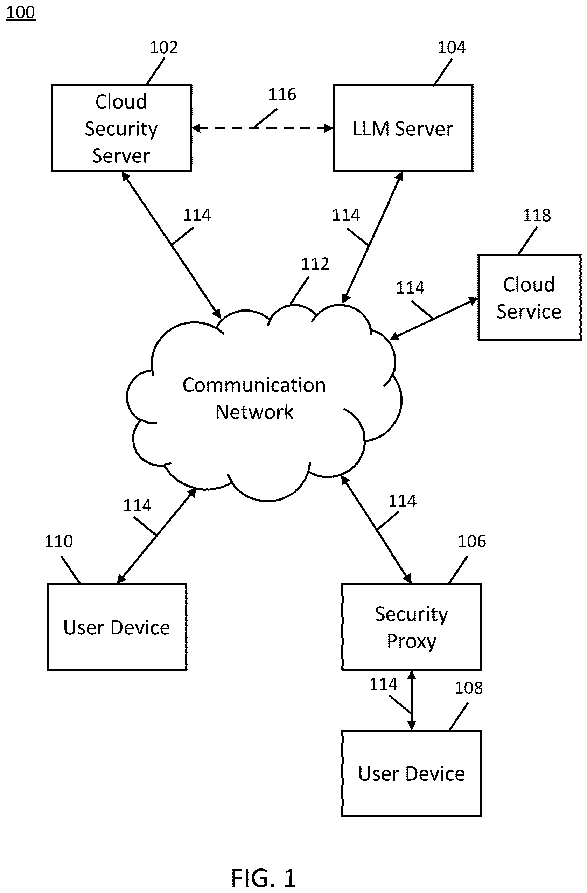

Turning to FIG. 1, an example 100 of a system for checking text for policy violations that can be used in accordance with some embodiments of the disclosed subject matter is shown. As illustrated, system 100 can include a cloud security server 102, a large language model (LLM) server 104, a security proxy 106, a user device 108, a user device 110, a communication network 112, and a cloud service 118.

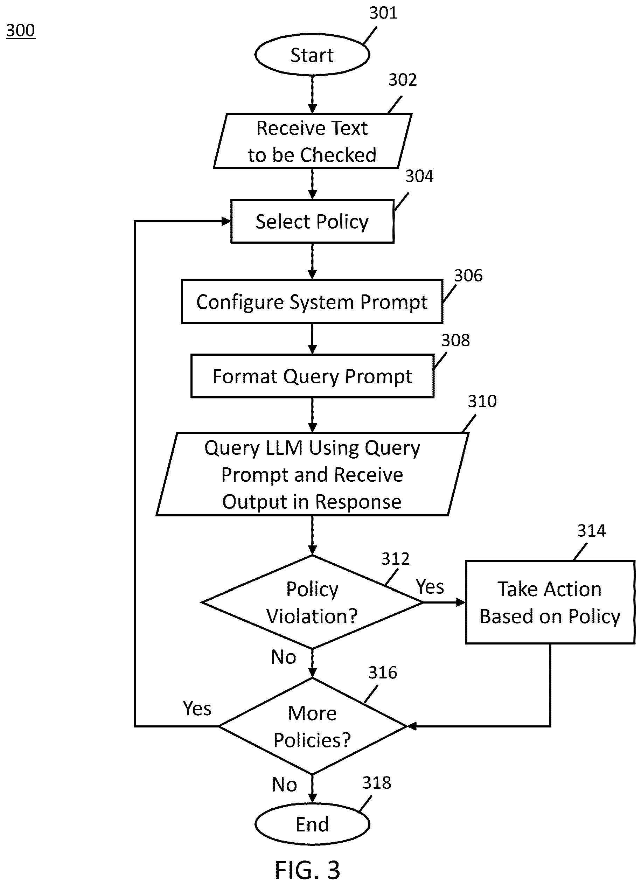

Cloud security server 102 can be any suitable server for performing security functions, including, but not limited to, the functions or part of the functions described below in connection with FIG. 3. In some embodiments, cloud security server 102 can act at least in part as a cloud access security broker (CASB) for a cloud service, such as a cloud file sharing service.

LLM server 104 can be any suitable device that may provide a large language model (or any other suitable machine learning mechanism for checking text for policy violation). For example, LLM server 104 can be a server that implements an LLM or that implements and interface to an LLM. In some embodiments, the LLM can be an off-the-shelf LLM or a custom LLM (e.g., an LLM developed and/or implemented inhouse by an organization).

Security proxy 106 can be any suitable device that can act as a proxy for user device 108. In some embodiments, security proxy 106 can execute a process or part of a process (among other processes, in some embodiments) as described below in connection with FIG. 3.

User devices 108 and 110 can be any suitable user devices, such as desktop computers, laptop computers, tablet computer, smart phones, and/or any other suitable computing devices, or any combination of the same, and can perform any suitable functions. In some embodiments, user devices 108 and 110 can execute a process or part of a process (among other processes, in some embodiments) as described below in connection with FIG. 3.

Communication network 112 can be any suitable combination of one or more wired and/or wireless networks in some embodiments. For example, in some embodiments, communication network 112 can include any one or more of the Internet, a mobile data network, a satellite network, a local area network, a wide area network, a telephone network, a cable television network, a WiFi network, a WiMax network, and/or any other suitable communication network.

Cloud service 118 can be any suitable cloud service that a user device might want to interact with. For example, in some embodiments, cloud service 118 can be a cloud-based file sharing service, a cloud-based communication service (e.g., a messaging service), and/or any other suitable service.

Communication links 114 can be provided for connecting cloud security server 102, LLM server 104, security proxy 106, user device 108, user device 110, and communication network 112 as shown in FIG. 1. The communication links can be any communication links suitable for communicating data, such as network links, dial-up links, wireless links, hard-wired links, any other suitable communication links, or any suitable combination of such links.

Communication link 116 can be provided for connecting cloud security server 102 and LLM server 104 as shown in FIG. 1. The communication link can be any communication link suitable for communicating data, such as a network link, a dial-up link, a wireless link, a hard-wired link, any other suitable communication link, or any suitable combination of such links.

Although one cloud security server 102, one LLM server 104, one security proxy 106, one user device 108, and one user device 110 are shown in FIG. 1 to avoid over-complicating the figure, any suitable numbers of these devices can be used in some embodiments. In some embodiments, user device 110 can be omitted. In some embodiments, user device 108 and security proxy 106 can be omitted. In some embodiments, cloud security server 102 can be omitted.

In some embodiments, two or more of cloud security server 102, LLM server 104, security proxy 106, user device 108, and/or user device 110 can be combined into a single device.

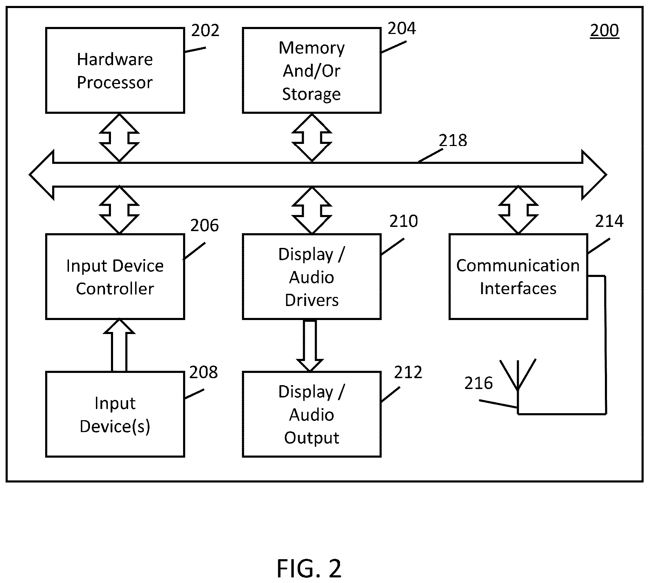

Cloud security server 102, LLM server 104, security proxy 106, user device 108, and/or user device 110 can be implemented using any suitable hardware in some embodiments. For example, in some embodiments, cloud security server 102, remote device 104, security proxy 106, user device 108, and/or user device 110 can be implemented using any suitable general-purpose computer or special-purpose computer. For example, a security proxy can be implemented using a special-purpose computer. Any such general-purpose computer or special-purpose computer can include any suitable hardware. For example, as illustrated in example hardware 200 of FIG. 2, such hardware can include hardware processor 202, memory and/or storage 204, an input device controller 206, an input device 208, display/audio drivers 210, display and audio output circuitry 212, communication interface(s) 214, an antenna 216, and a bus 218.

Hardware processor 202 can include any suitable hardware processor, such as a microprocessor, a micro-controller, digital signal processor(s), dedicated logic, and/or any other suitable circuitry for controlling the functioning of a general-purpose computer or a special purpose computer in some embodiments. For example, in some embodiments, when process 300 of FIG. 3 is executing on a device including a hardware processor 202, the hardware processor can perform one or more of the functions described in connection with FIG. 3.

Memory and/or storage 204 can be any suitable memory and/or storage for storing programs, data, and/or any other suitable information in some embodiments. For example, memory and/or storage 204 can include random access memory, read-only memory, flash memory, hard disk storage, optical media, and/or any other suitable memory.

Input device controller 206 can be any suitable circuitry for controlling and receiving input from input device(s) 208 in some embodiments. For example, input device controller 206 can be circuitry for receiving input from an input device 208, such as a touch screen, from one or more buttons, from a voice recognition circuit, from a microphone, from a camera, from an optical sensor, from an accelerometer, from a temperature sensor, from a near field sensor, and/or any other type of input device.

Display/audio drivers 210 can be any suitable circuitry for controlling and driving output to one or more display/audio output circuitries 212 in some embodiments. For example, display/audio drivers 210 can be circuitry for driving one or more display/audio output circuitries 212, such as an LCD display, a speaker, an LED, or any other type of output device.

Communication interface(s) 214 can be any suitable circuitry for interfacing with one or more communication networks, such as network 112 as shown in FIG. 1. For example, interface(s) 214 can include network interface card circuitry, wireless communication circuitry, and/or any other suitable type of communication network circuitry.

Antenna 216 can be any suitable one or more antennas for wirelessly communicating with a communication network in some embodiments. In some embodiments, antenna 216 can be omitted when not needed.

Bus 218 can be any suitable mechanism for communicating between two or more components 202, 204, 206, 210, and 214 in some embodiments.

Any other suitable components can additionally or alternatively be included in hardware 200 in accordance with some embodiments.

Turning to FIG. 3, an example 300 of a process for checking text for policy violations is illustrated. As noted above, process 300 can be executed by a hardware processor running on cloud security server 102, security proxy 106, user device 108, and/or user device 110.

As shown, after process 300 begins at 301, the process receives text to be checked for policy violations at 302. This text can be received from any suitable source in any suitable manner, in some embodiments. For example, this text can be received from an email, from a file upload, from a digital workplace message, from a video call transcript, from network traffic, from an optical character recognition that generates the text based on an image, a PDF file, and/or any other suitable content, and/or from any other suitable source. As another example, this text can be received as raw text, can be received as text in a structure format (e.g., JSON), can be received as text in an API call, and/or can be received in any other suitable manner. When process 300 is implemented on a cloud security server, such as cloud security server 102 of FIG. 1, the process 300 can receive the text from a process executing on security proxy 106, user device 108, or user device 110, in some embodiments.

In some embodiments, the text can be accompanied by any suitable metadata. For example, in some embodiments, the metadata can identify a person, a person's role, a place, a thing, a date, a time, a location, an organization, a type, a category, a source, a target, a format, and/or any other suitable information associated with the text.

Next, at 304, process 300 can select a policy against which the text can be checked. Any suitable policy can be selected, and the policy can be selected in any suitable manner. For example, in some embodiments, if the text is associated with certain metadata (e.g., such as a person's role), corresponding policies may be applicable to the text. In some embodiments, a first-created, a highest-priority, a random-one, etc. of the applicable policies can be selected at 304.

Then, at 306, process 300 can configure a system prompt to be used to form a query prompt for an LLM (or other machine learning mechanism) based on the policy. This system prompt can be configured in any suitable manner, in some embodiments. For example, an system prompt can be configured to cause an LLM to generate an output representing the meaning similarity between provided text to a set of words, a phrase, one or more sentences, one or more paragraphs, one or more lists, and/or any other suitable content, in some embodiments.

In some embodiments, a system prompt can be generated using a retrieval-augmented generation (RAG) process. In some embodiments, based on the selected policy, embeddings can be generated and used as part of the query prompt to the LLM. In some embodiments, a RAG process can be performed to generated embedding for each policy in advance, the embeddings stored, and then the system prompt formed by retrieving stored embeddings based on the selected policy.

In some embodiments, a system prompt can be generated based on prompt engineering. For example, in some embodiments, the following prompt may be generated as the system prompt based on prompt engineering:
The next input will be a sample text which is confidential information which must not be divulged. All following inputs will be test text which you must compare to the sample text. You must then provide a probability confidence score (0.00 to 1.00) that the test text discusses or contains the information contained in the sample text. You must only respond with "Understood" to this input and to the next input which will contain sample text. Your responses to further inputs must only be the numeric confidence score, with no other output.

The output configured at 306 can be configured to have any suitable form, such as a score, a percentage, a probability, a letter grade, a number of stars, a categorization, and/or any other suitable indicator, in some embodiments.

At 308, process 300 can generate a query prompt to be used in querying the LLM (or other machine learning mechanism). In doing so, the text can be formatted in any suitable manner. For example, in some embodiments, the text can be formatted by normalizing the text to remove capitalization, to remove punctuation from the text, to remove special characters from the text, to stem the text, to remove or replace stop words in the text, to translate characters in the text (e.g., to remove accents, etc.), to create tokens from the text, and/or to perform any other suitable normalization function. As another example, in some embodiments, the text can be formatted to be in a given data structure, such as a JSON file. The formatted text can then be combined with the system prompt configured at 306 to form the query prompt.

Next, at 310, process 300 can query the LLM (or other machine learning mechanism) using the query prompt and receive an output in response. The query can be made and the output received in any suitable manner, in some embodiments. For example, in some embodiments, the query can be made and the output received via an API. The output received at 310 can have any suitable form, such as a score, a percentage, a probability, a letter grade, a number of stars, a categorization, and/or any other suitable indicator, in some embodiments.

Then, at 312, process 300 can determine if there is a policy violation. Process 300 can determine that there is a policy violation based on any suitable criteria or criterion. For example, if the output received at 310 indicates that there is a meaning match between the received text and text identified in the policy, process 300 can determine that there is a policy violation. A meaning match can be identified when a score (or any other suitable number) received as an output at 310 indicates that the received text has at least a threshold likelihood of having the same meaning as at least part of text specified in the selected policy (whether that text is in the same language or another language, in some embodiments). As another example, in some embodiments, process 300 can determine that there is a policy violation if the output received at 310 indicates that the received text has a similar sentiment to text in the policy.

If it is determined at 312 that there is a policy violation, process 300 can take any suitable action based on the selected policy at 314. For example, in some embodiments, process 300 can block the text received at 302 from being further used (e.g., prevent sending of the text in an email, prevent uploading of the text in a file, prevent transmission of the text over a network, etc.) either by blocking that text at a device implementing process 300 or by instructing another device to block the text, logging the text, generating an alert (e.g., email, SMS, pop-up notification, etc.) that the text violates a policy, and/or any other suitable action.

After taking action at 314 or determining that there has not been a policy violation at 312, process 300 can determine at 316 whether there are any more policies to process. This determination can be made in any suitable manner in some embodiments. For example, if more than one policy is applicable to the text received at 302 and not all such policies have been selected at 304, process 300 can determine at 316 there are more policies to process. As another example, if more than one policy is applicable to the text received at 302 but an action taken at 314 makes further policy review unnecessary, process 300 can determine at 316 there are no more policies to process.

If it is determined at 316 that there are more policies to process, process can loop back to 302. Otherwise, process 300 can end at 318.

It should be understood that at least some of the above-described blocks of the process of FIG. 3 can be executed or performed in any order or sequence not limited to the order and sequence shown in and described in the figure. Also, some of the above blocks of the process of FIG. 3 can be executed or performed substantially simultaneously where appropriate or in parallel to reduce latency and processing times. Additionally or alternatively, some of the above described blocks of the process of FIG. 3 can be omitted.

In some embodiments, any suitable computer readable media can be used for storing instructions for performing the functions and/or processes described herein. For example, in some embodiments, computer readable media can be transitory or non-transitory. For example, non-transitory computer readable media can include media such as non-transitory magnetic media (such as hard disks, floppy disks, and/or any other suitable magnetic media), non-transitory optical media (such as compact discs, digital video discs, Blu-ray discs, and/or any other suitable optical media), non-transitory semiconductor media (such as flash memory, electrically programmable read-only memory (EPROM), electrically erasable programmable read-only memory (EEPROM), and/or any other suitable semiconductor media), any suitable media that is not fleeting or devoid of any semblance of permanence during transmission, and/or any suitable tangible media. As another example, transitory computer readable media can include signals on networks, in wires, conductors, optical fibers, circuits, any suitable media that is fleeting and devoid of any semblance of permanence during transmission, and/or any suitable intangible media.

Accordingly, mechanisms, including systems, methods, and media, for checking text for policy violations are provided, in some embodiments. Using these mechanisms, text that does violate a policy can be acted upon to provide greater computer security, including data loss prevention security, in some embodiments.

Although the invention has been described and illustrated in the foregoing illustrative embodiments, it is understood that the present disclosure has been made only by way of example, and that numerous changes in the details of implementation of the invention can be made without departing from the spirit and scope of the invention, which is limited only by the claims that follow. Features of the disclosed embodiments can be combined and rearranged in various ways.

## Claims

1. A system for checking text for policy violations, comprising:
a memory; and
at least one hardware processor that is coupled to the memory and that is collectively configured to at least:
receive data;
select a policy that applies to the data;
generate a large language model query prompt to evaluate the data against the policy;
query a large language model using the query prompt;
receive an output from the large language model;
determine that the text violates the policy based on the output; and
in response to determining that the text violates the policy, take a security action on the text.

2. The system of claim 1, wherein the at least one hardware processor determines that the data violates the policy by at least determining that the data has a meaning that is similar to content specified in the policy.

3. The system of claim 1, wherein the at least one hardware processor determines that the data violates the policy by at least determining that the data has a similar sentiment to content specified in the policy.

4. The system of claim 1, wherein the output is a score and wherein the at least one hardware processor determines that the data violates the policy by determining that the score meets a threshold.

5. The system of claim 1, wherein the security action is blocking further use of the text.

6. The system of claim 1, wherein the data is text.

7. The system of claim 1, wherein the query prompt includes embeddings generated using a retrieval-augmented generation (RAG) process.

8. A method for checking text for policy violations, comprising:
receiving data;
selecting a policy that applies to the data;
generating a large language model query prompt to evaluate the data against the policy using a hardware processor;
querying a large language model using the query prompt;
receiving an output from the large language model;
determining that the text violates the policy based on the output; and
in response to determining that the text violates the policy, taking a security action on the text.

9. The method of claim 8, wherein determining that the data violates the policy includes determining that the data has a meaning that is similar to content specified in the policy.

10. The method of claim 8, wherein determining that the data violates the policy includes determining that the data has a similar sentiment to content specified in the policy.

11. The method of claim 8, wherein the output is a score and wherein determining that the data violates the policy includes determining that the score meets a threshold.

12. The method of claim 8, wherein the security action is blocking further use of the text.

13. The method of claim 8, wherein the data is text.

14. The method of claim 8, wherein the query prompt includes embeddings generated using a retrieval-augmented generation (RAG) process.

15. A non-transitory computer-readable medium containing computer executable instructions that, when executed by a processor, cause the processor to perform a method for checking text for policy violations, the method comprising:
receiving data;
selecting a policy that applies to the data;
generating a large language model query prompt to evaluate the data against the policy;
querying a large language model using the query prompt;
receiving an output from the large language model;
determining that the text violates the policy based on the output; and
in response to determining that the text violates the policy, taking a security action on the text.

16. The non-transitory computer-readable medium of claim 15, wherein determining that the data violates the policy includes determining that the data has a meaning that is similar to content specified in the policy.

17. The non-transitory computer-readable medium of claim 15, wherein determining that the data violates the policy includes determining that the data has a similar sentiment to content specified in the policy.

18. The non-transitory computer-readable medium of claim 15, wherein the output is a score and wherein determining that the data violates the policy includes determining that the score meets a threshold.

19. The non-transitory computer-readable medium of claim 15, wherein the security action is blocking further use of the text.

20. The non-transitory computer-readable medium of claim 15, wherein the data is text.
